# EUROPEAN PATENT SPECIFICATION

(11) **EP 0 880 469 B1**
(45) Date of publication and mention of the grant of the patent: **22.03.2000**
(21) Application number: 97904189.4
(22) Date of filing: 23.01.1997
(51) Int. Cl.: C02F 1/28, C02F 1/42, C02F 1/00, B01J 47/04

(54) **METHOD AND APPARATUS FOR PURIFYING WATER**
METHODE UND VORRICHTUNG ZUR WASSERREINIGUNG
PROCEDE ET DISPOSITIF DE PURIFICATION D'EAU

(30) Priority: 09.02.1996 US 599008
(43) Date of publication of application: 02.12.1998
(73) Proprietor: United States Filter Corporation, Palm Desert, CA 92211 (US)
(72) Inventor: ATNOOR, Deven, Lowell, MA 01851 (US); BENDLIN, Herbert, D-56235 Ransbach-Baumbach (DE); JHA, Anil, D., Lexington, MA 02173 (US); McCARTHY, Paul, T., Nashua, NH 03060 (US); WILLIAMS, Arthur, F., Nashua, NH 03060 (US)
(74) Representative: Pacitti, Pierpaolo A.M.E.
(86) International application number: US9701721
(87) International publication number: WO9729048

(56) References cited:
- US-A- 4 287 057
- US-A- 4 368 123
- US-A- 4 430 226
- US-A- 4 876 014
- DATABASE WPI Section Ch, Week 8301 Derwent Publications Ltd., London, GB; Class D15, AN 83-00659K XP002031563 & JP 57 187 087 A (HITACHI ENG CO LTD) , 17 November 1982

## Description

### BACKGROUND OF THE INVENTION

### 1. Field of the Invention:

The present invention relates to a method and apparatus for purifying water and, more particularly, to a method and apparatus for purifying water such that it is substantially free of both organic and ionic contaminants.

### 2. Description of the Related Art:

High purity water is required for many purposes, including use in chemical and biological analysis, production, and the like. One measurement commonly employed to determine water purity is the specific resistivity of the water in megohm-cm at 25 °C, which is a measure of the ionic contamination. Pure water has a theoretical resistivity of 18.2 megohm-cm, and water can be provided approaching this value. Non-ionic contaminants such as organic materials and particulates are monitored by other analytical techniques and maximum values are sometimes specified.

Water is purified by a number of well-known techniques, including filtration, single or multiple distillation, sorption and ion exchange. Water initially treated by distillation or reverse-osmosis filtration is often further purified (or polished) by passage through activated carbon beds to absorb residual contaminant materials, principally organics. The pretreated water may also be treated by passage through layered or mixed beds of anion and cation exchange resins to remove residual ionic impurities. Often, these water streams are also filtered through microporous filters to remove residual contaminant particles.

Typically, the further purification (or polishing) of treated water streams is performed in a single multibed cartridge or in a plurality of interconnected multibed cartridges in a filter pack arrangement. For example, Pavia, in U.S. Patent No. 4,196,081, discloses an apparatus for water purification wherein one embodiment includes a single filter cartridge. The filter cartridge for purifying water includes a layer of activated carbon positioned upstream of a mixed bed of deionization resin, thereby attempting to prevent organic contamination of the resin and enhance filter efficiency. It is noted, however, that activated carbons contain ionic impurities, as well as ash (fines) that is formed from the residues of pyrolyzed spherical petroleum distillate or resin beads that are used to produce the carbons, and they occasionally collect microorganisms. All of these contaminants can be released into the passing water. In addition, it is known that the deionization resins may release trace quantities (parts per billion) of organic contamination into the water. Although relatively minor, even this level of organic contamination can detrimentally effect organic analysis, for example, by high performance liquid chromatography, and the like.

A wide variety of water purification methods and filtration devices have been proposed to address the effect of organic and ionic impurities in water and in the carbon and resin beds. For example, a method and apparatus for producing ultrapure water is disclosed by Hedge et al., in U.S. Patent No. 4,430,226. This patent discloses a water treatment cartridge and method for producing ultrapure water substantially free of both organic and ionic contaminants, and having a resistivity of between 16 and 18 megohm-cm. The device includes a container having a particulate admixture of activated carbon and mixed bed ion exchange resins. The admixture is prepared by known techniques, including rolling the components together in a drum for a period of time. In operation, water is passed through the admixture of mixed ion exchange resins and activated carbon. In theory, the carbon removes the residual organic contamination released from the resins, and the mixed ion exchange resins remove ionic contamination released from the carbon. It has been found, however, that particulate admixtures of activated carbon and mixed bed ion exchange resins, similar to those disclosed in U.S. Patent No. 4,430,226, can separate over time as a result, in part, of the different densities and particle sizes of the admixture components, and lead to lower quality water. Moreover, preparation of the admixture prior to filling the filter cartridge may lead to production inefficiencies and handling problems.

In addition to the foregoing, it has been found that an unrestricted flow of water through a water treatment cartridge containing a particulate admixture to purify the water can create channeling in the bed along the cartridge side walls during water downflow, or fluidization of the bed during water upflow. In both instances, inefficient water contact with the admixture of activated carbon and mixed bed ion exchange resins can result in lower overall water purity. Another disadvantage associated with known filter systems, including layers or admixtures of activated carbon and mixed ion exchange resin, is the necessity of a pre-use (startup) rinse and/or a soaking time period that may last from several hours to overnight to clean the activated carbon of some ionic impurities and ash and to wet-up and expand the ion exchange resins. As a result of the required start-up procedures, it is often required to pass a water stream through the filter for a period of time to obtain high purity water.

### SUMMARY OF THE INVENTION

The present invention is directed to a method and apparatus for purifying water. The present method and apparatus can produce purified water having very low organic and ionic contamination, a resistivity of greater than 17.5 megohm-cm and TOC levels less than 5 parts per billion. The method for purifying water includes providing a cartridge having an inlet and an outlet. The cartridge is filled with at least one layer of an activated carbon and at least one layer of a mixture of ion exchange resins. The layers of activated carbon and mixed ion exchange resins are separated by a free-floating inter-resin layer screen. A water stream is fed into the cartridge through the inlet and through the separated layers of activated carbon and mixed ion exchange resins to produce a pure water stream substantially free of organic and ionic contaminants. Preferably, the activated carbon layer is positioned upstream of the layer of mixed ion exchange resins.

In another aspect of the present invention, smaller diameter anion and/or cation exchange resin beads are used to improve the performance of the mixed bed ion exchange resin layers within the water purifying apparatus. In addition, the present invention is also directed to performing a prewashing and extraction process on an adsorbing material having a low ash content, such as activated carbon formed from pyrolyzed resins to enhance the overall performance of the water purifying apparatus.

In another aspect of the present invention, a free-floating inter-resin layer screen is provided to separate the alternating layers of filtration materials, including activated carbon and mixtures of ion exchange resins within the cartridge housing. The screen also acts as a secondary flow distributor between the carbon and resin layers. The free-floating inter-resin layer screen also prevents shifting and undesired mixing of the alternating layers of filtration materials.

### DETAILED DESCRIPTION OF THE INVENTION

The present invention is directed to a method and apparatus for producing high purity water, with very low organic and ionic contamination, having a resistivity of greater than about 17.5 megohm-cm, and TOC levels less than 5 parts per billion.

The present invention utilizes at least one cartridge housing having an inlet and an outlet, and containing one or more sequential layers of activated carbon and mixed bed anion and cation exchange resin. The cartridge housing is filled with the alternating layers by methods known to those skilled in the art. Typically, a predetermined quantity of a first layer is poured into the cartridge, and the cartridge is shaken to fill any void spaces. This procedure is repeated with alternating layers of material until a final desired level is achieved.

A water feed stream enters the cartridge housing through the inlet, and is removed through the cartridge outlet after it has been treated for use. The purified water outlet stream may also be recycled through the cartridge. The inlet flow of water may be evenly distributed over the sequential layers of activated carbon and mixed bed anion and cation exchange resin, for example, by a flow distributor device as shown and described in a co-pending PCT Application, Publication No. WO-A-97/28877, entitled Water Purification Cartridge Assembly with Unidirectional Flow Through Filter Media, which is incorporated herein by reference.

The number and height of each of the sequential layers of activated carbon and mixed ion exchange resin can vary depending on the requirements of the water to be treated. Although as few as 2 layers can be used in a cartridge, it has been found that between about 4 and 10 layers in a single filter cartridge are most effective in producing high purity water. The total number of layers used in a single filter cartridge is, in part, a function of the overall volume of the cartridge. The thickness of each of the layers is determined by the type of resin and activated carbon and the impurities found therein. Typically, the thickness of each individual layer can range from about 1 percent to about 50 percent of the overall cartridge height. Most preferably, the thickness of each layer is between about 10 and about 40 percent of the overall cartridge height to provide adequate residence time for the water to be treated in each layer. If the layer is too thin, the water will pass through it quickly, and will fail to be treated effectively. Conversely, if the layer is too thick, residual ionic impurities (in the activated carbon layer) and/or organic impurities (in the resin layer) may be released into the water stream. As is known to those skilled in the art, the activated carbon layers typically absorb the organic contaminants present in the feed water and/or released by the resin, and the mixed bed ion exchange resin layers remove the ionic impurities from the feed water and/or released by the carbon.

The ion exchange resins are available in particle sizes ranging between about 200 µm to about 2 mm. In another aspect of the present invention, it has been found that smaller diameter ion exchange resin beads can be used to improve the performance of the mixed bed ion exchange resin layers and, therefore, the overall water purity produced by the present invention. It is believed that the smaller size of the resin beads improves the kinetics of the overall reaction, in part, by the improved total surface area of the smaller sized resin beads. Along these lines, it has been found that substituting smaller cation resin beads, having a nominal particle diameter of 350 µm, for cation resin beads having a nominal particle diameter of about 590 µm in an alternating configuration similar to those described above, the total capacity utilization of the mixed ion exchange resins was increased. In particular, the total capacity utilization using 40 percent, by volume, of a mixed ion exchange resin layer of the smaller cation resin beads, and using similar feed water conditions, was about 8 percent higher than for the larger size cation resin beads. A 75 percent capacity utilization was realized with the larger cation resin beads, which accounted for about 40 percent of an approximately uniform resin bead size mixture, and 83 percent capacity utilization was realized when the mixture included 40 percent, by volume, of the smaller cation resin beads mixed with larger anion resin beads. Moreover, if the anion bead size is similarly reduced, such that an approximately uniform resin bead size mixture is formed, the total capacity utilization is expected to increase.

Although both types of resin are typically produced as substantially equivalent sized spherical beads, as noted, either the anion or cation resin can have a reduced size relative to the other. Moreover, the resin can be mixed in various proportions to obtain the desired level of removal of ionic contamination from a water stream. The smaller resin bead (either anion or cation resin) can range from between about 40 percent to about 90 percent of the size of the larger bead. Preferably, the smaller resin bead is about 65 percent of the size of the larger bead. The ratio of cation to anion resin can be adjusted between 1:10 to 10:1, depending upon the feed water and the desired level of purity in the water produced. Most preferably, equal parts of cation and anion resin are used in the mixed bed ion exchange resin layers to provide an approximately equal number of sites for ion collection.

Adsorption materials can be used to remove a wide variety of organic, and sometimes inorganic, contaminants. Such materials include natural and synthetic adsorbents including activated carbon, carbonaceous adsorbents such as Ambersorb™ adsorbants, available from Rohm & Haas Company, Philadelphia, PA, and the like. Most typically, the present invention utilizes an activated carbon material that is adsorptive to a wide variety of organic materials and has a low ash content. As is known to those skilled in the art, ash (fines) is formed from the residues of pyrolyzed spherical petroleum distillate or resin beads that are used to produce the carbons. Carbons made by pyrolyzing resin beads, or high molecular weight petroleum distillate residues, are inherently low in ash (fines) content. Furthermore, carbons formed from resin beads or high molecular weight petroleum distillate residues generally provide a more uniform spherical size than those produced from coal or organic materials. Activated carbons made from coal or organic materials typically include between about 5 and 20 percent ash prior to washing. The substantially uniform size and spherical shape of the carbon particles allows for more efficient handling and packing. The low ash (fines) content minimizes any leaching and channeling within the filter cartridge.

It has been found that a washing and extraction process used with the higher purity activated carbons formed from resin beads, or with low ash/impurity carbonaceous adsorbents, results in even better physical properties and performance of the activated carbon, versus those carbons and adsorbents that are not prewashed. In another aspect of the present invention, therefore, a prewashed, low ash activated carbon can be used to improve the performance of the filtration apparatus resulting in enhanced overall water purity. During the carbon processing, a substantially uniform sized and spherical shaped activated carbon, such as Kureha™ carbon, available from Kureha Chemical Industry Co., Ltd., Japan, is mixed with deionized water (about 17 megohm-cm) at a ratio of about 2:1. The mixture is then heated to a temperature of between about 77°C (170°F) to about 104°C (220°F), and is allowed to stabilize for a predetermined period of time depending upon the quantity of carbon being washed. This period, for example, can last between about 1.0 and about 2.0 hours. The initial deionized water bath is then drained, and fresh deionized water is added to the activated carbon The conductivity of the drained water is measured, and the procedure is repeated until a desired level is achieved. The initial conductivity of the water decreased from approximately 20 µMhos/cm to below 2 µMhos/cm. After each rinse, the activated carbon is purged with nitrogen for a predetermined period of time to release any gases that may be trapped within the porous carbon. The activated carbon is dewatered (dried) for use in the filter cartridge of the present invention after the final rinse and nitrogen purge.

In another aspect of the present invention, a free-floating inter-resin layer screen is provided to separate the alternating layers of the filtration materials within the cartridge housing. The free-floating inter-resin layer screen prevents shifting and undesired mixing of the alternating layers of filtration materials during use, production, or shipping and handling. As with any internal component of a water purification device, the free-floating inter-resin layer screen may be constructed of any material which substantially limits solvent absorption by the water of contaminants. Typically, the inter-resin layer screen is made from an inert plastic or metallic material. The screen is preferably made from a low extractable material, such as polyethylene, polypropylene, PVDF, Teflon® resin or another fluorinated thermoplastic material, nylon, and the like.

The screen can also act as a secondary flow distributor between the activated carbon and resin layers. The screen prevents the passage of carbon or resin particles to the alternate adjacent layer while allowing water to pass with a minimal pressure drop. The screen, therefore, acts as a secondary fluid distributor within a filter cartridge housing. Accordingly, the inter-resin layer screen typically includes an open area of between about 5 and about 95 percent, while having a thickness of between about 0.38 mm (0.015 inch) to about 6.4 mm (0.25 inch). As noted, the screen is free-flowing (not rigidly fixed to any surface of the cartridge or any other component of the filtration apparatus) between the filtration particulate layers. Typically, the screen is cut to the cross-sectional shape, and dimensions, of the inside perimeter of the cartridge housing to prevent carbon and/or resin particles from mixing along this surface. To further prevent the layers from mixing, the screen may include a rigid outer rim to provide the screen with added stability. The addition of a rigid outer rim would also operate to prevent fluid channeling along the inner surface of the cartridge by redirecting the fluid flow away from the cartridge housing walls.

The layered filtration media configuration, including the free-floating inter-resin screen separator, of the present invention can, for example, be incorporated in a filtration device as shown and described in a co-pending PCT Application, Publication No. WO-A-97/28877, entitled Water Purification Cartridge Assembly with Unidirectional Flow Through Filter Media, which is incorporated herein by reference.

The present invention will be further illustrated by the following examples, which are intended to be illustrative in nature and are not to be construed as limiting the scope of the invention.

### EXAMPLE I

A water purification apparatus, including at least one cartridge housing, having an inlet and an outlet, and at least one layer of activated carbon positioned upstream of at least one layer of mixed ion exchange resin, was prepared and evaluated to determine the effectiveness of the apparatus in providing pure water substantially free of both organic and ionic contaminants.

Pretreated water (by reverse osmosis) having a conductivity of about 5.0 µMhos/cm was pumped at about 2.0 liters per minute through the cartridge. A cylindrical polypropylene cartridge was used having an inner diameter of about 150 mm (6 inches) and was about 300 mm (12 inches) tall. The cartridge was filled with four alternating layers of activated carbon and mixed bed anion and cation exchange resins. The ion exchange resin used was Monosphere™ MR-3 mixed bed resin having a 1:1 ratio in capacity of anion and cation resin, available from Dow Chemical Company, Midland, MI. The activated carbon used was Kureha™ carbon in bead form (substantially spherical particles) having a very low ash content of less than 0.5 percent, by weight.

The cartridge was filled with four layers of various thickness (relative to the overall cartridge length). No screen separation device was inserted between the alternating layers. Proceeding downstream, as contacted by the feed water, the layers included activated carbon (12 percent), a mixed anion and cation exchange resin bed (58 percent), activated carbon (12 percent), and a mixed ion exchange resin bed (18 percent). The product water resistivity was measured at the cartridge outlet to be greater than 17.6 megohm-cm, and total organic content (TOC) levels in the product were found to be less than 5 parts per billion.

### EXAMPLE II

The cartridge of EXAMPLE I was filled with four alternating layers of the activated carbon and mixed ion exchange resins (as described in EXAMPLE I) having approximately equal thickness (each layer was 25 percent of the cartridge length), beginning with activated carbon and ending with the mixed ion exchange resin bed. A free-floating inter-resin layer screen was inserted between each alternating layer. The activated carbon had a very low ash content and was prepared by a separate washing and extraction process prior to filling the cartridge. The water fed to the cartridge was pretreated similar to that used in EXAMPLE I (reverse osmosis), and it was also fed through a layer of activated carbon and a layer of mixed ion exchange resin prior to its passage through the four-layered cartridge. The water was pumped at about 2.0 liters per minute through the cartridge. The product water resistivity was measured at the cartridge outlet to be greater than 17.6 megohm-cm, and the TOC levels were found to be less than 5 parts per billion.

EXAMPLES I and II illustrate that multiple layers of activated carbon and mixed ion exchange resin in a cartridge can be effectively used to purify water and substantially remove all organic and ionic impurities. Moreover, the EXAMPLES I and II show that the carbon and resin layers can each vary in thickness within the cartridge while still providing water that is substantially free of organic and ionic contaminants.

### EXAMPLE III

The cartridge of EXAMPLE I was filled with six alternating layers of the activated carbon and mixed ion exchange resins. The order of the layers included carbon (8.3 percent), mixed bed ion exchange resins (58.3 percent), carbon (8.3 percent), mixed bed ion exchange resin (8.3 percent), carbon (8.3 percent), and mixed bed ion exchange resin (8.3 percent). Similar to EXAMPLES I and II, the water fed through the cartridge was reverse osmosis pretreated water, at a flow rate of 2 liters per minute. The product water resistivity was measured at the cartridge outlet to be no greater than 13.0 megohm-cm.

This EXAMPLE indicates that the layering order and thicknesses of the filtration media have a significant effect on the purity of the water produced.

### EXAMPLE IV

To determine the effectiveness of the above-described prewashing and extraction process on activated carbon, the cartridge of EXAMPLE I was filled with four alternating layers of the activated carbon and mixed ion exchange resins (as described in EXAMPLE I) having approximately equal thickness (each layer was 25 percent of the cartridge length), beginning with activated carbon and ending with the mixed ion exchange resin bed. The carbon used was only rinsed with a reverse osmosis treated water at room temperature for about an hour. The carbon. therefore, was not subjected to the prewashing and extraction process described above and as used on the carbons used in EXAMPLES I, II and III. The resin used was a very low total organic content, uniform bead size mixed bed. As with all other EXAMPLES, the water fed through the cartridge was reverse osmosis pretreated water and, as in EXAMPLE II, it was also fed through a layer activated carbon and a layer of mixed ion exchange resin prior to its passage through the four-layered cartridge. The product water resistivity was measured at the cartridge outlet and never reached 17.5 megohm-cm.

The same rinsed carbon was used in a cartridge having six alternating layers having approximately equal thicknesses (each layer was about 17 percent of the cartridge length), beginning with activated carbon and ending with mixed bed ion exchange resin. The cartridge was fed with similarly pretreated water, and the product water resistivity never reached 15.0 megohm-cm.

Although particular embodiments of the invention have been described in detail for purposes of illustration, various modifications may be made without departing from the scope of the invention. Accordingly, the invention is not to be limited except as by the appended claims.

## Claims

1. A method for purifying water, comprising:
providing a cartridge having an inlet and an outlet;
filling said cartridge with between 4 and 10 sequential alternating layers of an activated carbon and a mixture of ion exchange resins;
wherein each of said layers of activated carbon mixture of ion exchange resins has a thickness sufficient to provide adequate residence time for the water to be treated in each layer;
passing a water stream into said cartridge inlet and through said layers of activated carbon and mixed ion exchange resins to produce a pure water stream substantially free of organic and ionic contaminants;
and removing said purified water from said cartridge outlet.

2. A method for purifying water as claimed in claim 1 wherein said purified water has a resistivity of greater than 17.5 megohm-cm and a TOC level of less than 5ppb.

3. A method for purifying water in Claim 1 or Claim 2 wherein said mixture of ion exchange resins comprises anion exchange resins and cation exchange resins in a ratio of between about 1:10 to about 10:1.

4. A method for purifying water as claimed in Claim 3 wherein said ion exchange resins include substantially equal parts of anion and cation exchange resins.

5. A method for purifying water as claimed in any one of Claims 1 to 4 wherein said ion exchange resin are substantially spherical beads.

6. A method for purifying water as claimed in any one of Claims 1 to 5 wherein said ion exchange resins have a nominal particle size of between about 200 µm and about 2 mm.

7. A method for purifying water as claimed in any one of Claims 3 to 6 wherein one of said anion and cation exchange resins has a nominal particle size that is between about 40 percent to 90 percent of the nominal particle size of the other exchange resin.

8. A method for purifying water as claimed in Claim 7 wherein one of said anion and cation exchange resins has a nominal particle size that is about 65% of the nominal particle size of the other exchange resin.

9. A method for purifying water as claimed in any one of the preceding Claims wherein said activated carbon is prewashed.

10. A method for purifying water as claimed in Claim 9 wherein the activated carbon is prewashed in water at a temperature of between about 77°C (170°F) to about 104°C (220°F).

11. A method for purifying water as claimed in any one of the preceding Claims wherein the activated carbon is formed from pyrolyzed resin.

12. An apparatus for purifying water, comprising:
at least one cartridge housing having an inlet and an outlet;
between 4 and 10 sequential alternating layers of an activated carbon bed and a mixture of ion exchange resins positioned within said housing;
wherein each of said layers of activated carbon and mixture of ion exchange resins has a thickness sufficient to provide adequate residence time for the water to be treated in each layer.

13. An apparatus as claimed in Claim 12 wherein said mixture of ion exchange resins comprises anion exchange resins and cation exchange resins in a ratio of between about 1:10 to about 10:1.

14. An apparatus as claimed in Claim 12 or Claim 13 wherein said ion exchange resins include substantially equal parts of anion and cation exchange resins.

15. An apparatus as claimed in any one of Claims 12 to 14 wherein said ion exchange resins are substantially spherical beads.

16. An apparatus as claimed in any one of Claims 12 to 15 wherein said ion exchange resins have a nominal particle size of between 200pm and about 2mm.

17. An apparatus as claimed in any one of Claims 13 to 16 wherein one of said anion and cation exchange resins has a nominal particle size that is between about 40 percent to about 90 percent of the nominal particle size of the other exchange resin.

18. An apparatus as claimed in Claim 17 wherein one of said anion and cation exchange resins has a nominal size that is about 65 percent of the nominal particles size of the other exchange resin.

19. An apparatus as claimed in any one of Claims 12 to 18 wherein the activated carbon is prewashed and is formed from pyrolyzed resin.

20. An apparatus as claimed in any one of Claims 12 to 19 further comprising a free-floating inter-resin layer screen positioned between said layers of activated carbon and mixture of ion exchange resins that is constructed of an inert material, has an open area of between about 5 and about 95 percent, and has a thickness of between about 0.38mm (0.015 inch) to about 6.4mm (0.25 inch).

21. An apparatus as claimed in Claim 20 wherein said screen further includes a rigid outer perimeter rim.

## Patentansprüche

1. Verfahren zur Wasserreinigung, das folgendes umfaßt:
Bereitstellen einer Kartusche mit einer Einlaßöffnung und einer Auslaßöffnung;
Füllen der Kartusche mit zwischen 4 bis 10 aufeinanderfolgenden, sich abwechselnden Schichten einer Aktivkohle und einer Mischung aus lonenaustauschharzen;
wobei jede der Schichten von Aktivkohle und der Mischung aus lonenaustauschharzen eine Dicke aufweist, die genügt, um eine angemessene Durchlaufzeit bereitzustellen, damit das Wasser in jeder Schicht behandelt wird;
Durchlaufen lassen eines Wasserstrahls durch die Einlaßöffnung der Kartusche und durch die Schichten Aktivkohle und gemischter lonenaustauschharze, um einen gereinigten Wasserstrahl herzustellen, der im wesentlichen frei von organischen und ionischen Kontaminanten ist;
und Entfernen des gereinigten Wassers von der Auslaßöffnung der Kartusche.

2. Verfahren zur Wasserreinigung gemäß Anspruch 1, wobei das gereinigte Wasser einen Widerstand von mehr als 17,5 Megaohm-cm und einen TOC-Gehalt von weniger als 5 ppb aufweist.

3. Verfahren zur Wasserreinigung gemäß Anspruch 1 oder Anspruch 2, wobei die Mischung aus lonenaustauschharzen Anionaustauschharze und Kationenaustauschharze in einem Verhältnis von zwischen ungefähr 1:10 bis ungefähr 10:1 enthält.

4. Verfahren zur Wasserreinigung gemäß Anspruch 3, wobei die lonenaustauschharze im wesentlichen gleiche Teile Anionaustauschharze und Kationenaustauschharze beinhalten.

5. Verfahren zur Wasserreinigung gemäß einem der Ansprüche 1 bis 4, wobei die lonenaustauschharze im wesentlichen sphärische Körner sind.

6. Verfahren zur Wasserreinigung gemäß einem der Ansprüche 1 bis 5, wobei die lonenaustauschharze eine nominale Partikelgröße von zwischen ungefähr 200 µm und ungefähr 2 mm aufweisen.

7. Verfahren zur Wasserreinigung gemäß einem der Ansprüche 3 bis 6, wobei einer der Anionaustauschharze und Kationenaustauschharze eine nominale Partikelgröße von zwischen ungefähr 40 Prozent und 90 Prozent der nominalen Partikelgröße des anderen Austauschharzes aufweist.

8. Verfahren zur Wasserreinigung gemäß Anspruch 7, wobei eines der Anionaustauschharze oder Kationenaustauschharze eine nominale Partikelgröße aufweist, die ungefähr 65% der nominalen Partikelgröße des anderen Austauschharzes ist.

9. Verfahren zur Wasserreinigung gemäß einem der vorhergehenden Ansprüche, wobei die Aktivkohle vorgewaschen ist.

10. Verfahren zur Wasserreinigung gemäß Anspruch 9, wobei die Aktivkohle in Wasser bei einer Temperatur von zwischen ungefähr 77°C (170°F) und ungefähr 104°C (120°F) vorgewaschen wird.

11. Verfahren zur Wasserreinigung gemäß einem der vorhergehenden Ansprüche, wobei die Aktivkohle aus pyrolisiertem Harz geformt ist.

12. Eine Vorrichtung zur Wasserreinigung, die folgendes umfaßt:
zumindest ein Kartuschengehäuse mit einer Einlaßöffnung und einer Auslaßöffnung;
zwischen 4 und 10 aufeinanderfolgende, sich abwechselnde Schichten eines Aktivkohlebetts und einer Mischung aus lonenaustauschharzen, die innerhalb des Gehäuses angeordnet sind;
wobei jede der Schichten von Aktivkohle und der Mischung aus lonenaustauschharzen eine Dicke aufweist, die genügt, um eine angemessene Durchlaufzeit bereitzustellen, damit das Wasser in jeder Schicht behandelt wird.

13. Vorrichtung gemäß Anspruch 12, wobei die Mischung aus lonenaustauschharzen Anionaustauschharze und Kationenaustauschharze in einem Verhältnis von ungefähr 1:10 bis ungefähr 10:1 beinhaltet.

14. Vorrichtung gemäß Anspruch 12 oder Anspruch 13, wobei die lonenaustauschharze im wesentlichen gleiche Teile Anionaustauschharze und Kationenaustauschharze beinhalten.

15. Vorrichtung gemäß einem der Ansprüche 12 bis 14, wobei die lonenaustauschharze im wesentlichen sphärische Körner sind.

16. Vorrichtung gemäß einem der Ansprüche 12 bis 15, wobei die lonenaustauschharze eine nominale Partikelgröße von zwischen 200 µm und ungefähr 2 mm aufweisen.

17. Vorrichtung gemäß einem der Ansprüche 13 bis 16, wobei eines der Anionaustauschharze oder Kationenaustauschharze eine nominale Partikelgröße von zwischen ungefähr 40 Prozent bis ungefähr 90 Prozent der nominalen Partikelgröße des anderen Austauschharzes aufweist.

18. Vorrichtung gemäß Anspruch 17, wobei eines der Anionaustauschharze oder Kationenaustauschharze eine nominale Partikelgröße aufweist, die ungefähr 65 Prozent der nominalen Partikelgröße des anderen Austauschharzes ist.

19. Vorrichtung gemäß einem der Ansprüche 12 bis 18, wobei die Aktivkohle vorgewaschen ist und aus pyrolisiertem Harz geformt ist.

20. Vorrichtung gemäß einem der Ansprüche 12 bis 19, die weiters ein frei schwebendes, zwischen den Schichten liegendes Sieb umfaßt, das zwischen den Schichten der Aktivkohle und der Mischung aus lonenaustauschharzen angeordnet ist, das aus einem inerten Material besteht, eine offene Fläche von zwischen ungefähr 5 und ungefähr 95 Prozent und eine Dicke von zwischen ungefähr 0,38 mm (0,015 Inch) und ungefähr 6,4 mm (0,25 Inch) aufweist.

21. Vorrichtung gemäß Anspruch 20, wobei das Sieb weiters einen steifen Außenumfangsrand beinhaltet.

## Revendications

1. Un procédé de purification d'eau, consistant :
à fournir une cartouche possédant une entrée et une sortie ;
à remplir ladite cartouche de 4 à 10 couches alternées séquentielles d'un charbon actif et d'un mélange de résines échangeuses d'ions ;
dans lequel chacune des dites couches de charbon actif et de mélange de résines échangeuses d'ions possède une épaisseur suffisante pour fournir un temps de séjour adéquat pour le traitement de l'eau dans chaque couche ;
à faire passer un courant d'eau à l'intérieur de ladite entrée de cartouche et à travers lesdites couches de charbon actif et de résines échangeuses d'ions mélangées afin de produire un courant d'eau pure sensiblement dépourvu de polluants organiques et ioniques ; et
à faire sortir ladite eau purifiée de ladite sortie de cartouche.

2. Un procédé de purification d'eau selon la revendication 1 dans lequel ladite eau purifiée possède une résistivité supérieure à 17,5 mégohm-cm et une teneur totale en carbone organique inférieure à 5 ppb.

3. Un procédé de purification d'eau selon la revendication 1 ou la revendication 2 dans lequel ledit mélange de résines échangeuses d'ions consiste en des résines échangeuses d'anions et des résines échangeuses de cations dans un rapport allant de 1/10 environ à 10/1 environ.

4. Un procédé de purification d'eau selon la revendication 3 dans lequel lesdites résines échangeuses d'ions comprennent des parts sensiblement égales de résines échangeuses d'anions et de cations.

5. Un procédé de purification d'eau selon une quelconque des revendications 1 à 4 dans lequel lesdites résines échangeuses d'ions sont des perles sensiblement sphériques.

6. Un procédé de purification d'eau selon une quelconque des revendications 1 à 5 dans lequel lesdites résines échangeuses d'ions possèdent une taille de particule nominale allant de 200 µm environ à 2 mm environ.

7. Un procédé de purification d'eau selon une quelconque des revendications 3 à 6 dans lequel une résine parmi lesdites résines échangeuses d'anions et de cations possède une taille de particule nominale qui représente de 40 pour cent environ à 90 pour cent de la taille de particule nominale de l'autre résine échangeuse.

8. Un procédé de purification d'eau selon la revendication 7 dans lequel une résine parmi lesdites résines échangeuses d'anions et de cations possède une taille de particule nominale qui représente 65% environ de la taille de particule nominale de l'autre résine échangeuse.

9. Un procédé de purification d'eau selon une quelconque des revendications précédentes dans lequel ledit charbon actif subit un prélavage.

10. Un procédé de purification d'eau selon la revendication 9 dans lequel le charbon actif subit un prélavage dans de l'eau à une température allant de 77°C (170°F) environ à 104°C (220°F) environ.

11. Un procédé de purification d'eau selon une quelconque des revendications précédentes dans lequel le charbon actif est formé à partir de résine obtenue par pyrolyse.

12. Un appareil de purification d'eau, comprenant :
au moins un logement de cartouche possédant une entrée et une sortie ;
de 4 à 10 couches alternées séquentielles d'un lit de charbon actif et d'un mélange de résines échangeuses d'ions positionnées à l'intérieur du dit logement ;
dans lequel chacune des dites couches de charbon actif et de mélange de résines échangeuses d'ions possède une épaisseur suffisante pour fournir un temps de séjour adéquat pour le traitement de l'eau dans chaque couche.

13. Un appareil selon la revendication 12 dans lequel ledit mélange de résines échangeuses d'ions comprend des résines échangeuses d'anions et des résines échangeuses de cations dans un rapport allant de 1/10 environ à 10/1 environ.

14. Un appareil selon la revendication 12 ou la revendication 13 dans lequel lesdites résines échangeuses d'ions comprennent des parts sensiblement égales de résines échangeuses d'anions et de cations.

15. Un appareil selon une quelconque des revendications 12 à 14 dans lequel lesdites résines échangeuses d'ions sont des perles sensiblement sphériques.

16. Un appareil selon une quelconque des revendications 12 à 15 dans lequel lesdites résines échangeuses d'ions possèdent une taille de particule nominale allant de 200µm environ à 2 mm environ.

17. Un appareil selon une quelconque des revendications 13 à 16 dans lequel une résine parmi lesdites résines échangeuses d'anions et de cations possède une taille de particule nominale qui représente de 40 pour cent environ à 90 pour cent environ de la taille de particule nominale de l'autre résine échangeuse.

18. Un appareil selon la revendication 17 dans lequel une résine parmi lesdites résines échangeuses d'anions et de cations possède une taille nominale qui représente 65% environ de la taille de particule nominale de l'autre résine échangeuse.

19. Un appareil selon une quelconque des revendications 12 à 18 dans lequel le charbon actif subit un prélavage et est formé à partir de résine obtenue par pyrolyse.

20. Un appareil selon une quelconque des revendications 12 à 19 comprenant de plus un tamis flottant librement entre les couches de résine positionné entre lesdites couches de charbon actif et de mélange de résines échangeuses d'ions, lequel est construit à partir d'un matériau inerte, possède une zone ouverte allant d'environ 5 à 95 pour cent, et possède une épaisseur allant de 0,38 mm (0,015 pouce) environ à 6,4 mm (0,25 pouce) environ.

21. Un appareil selon la revendication 20 dans lequel ledit tamis comprend de plus un rebord de périmètre externe rigide.
